**Europäisches Patentamt**

**European Patent Office**

**Office européen des brevets**

(11) Veröffentlichungsnummer: **0 410 097 A2**

# (12) EUROPÄISCHE PATENTANMELDUNG

(21) Anmeldenummer: 90109432.6

(22) Anmeldetag: 18.05.90

(51) Int. Cl.⁵: **G01L 1/22**, G01L 5/16

(30) Priorität: 26.07.89 DE 8909048 U

(43) Veröffentlichungstag der Anmeldung:
30.01.91 Patentblatt 91/05

(84) Benannte Vertragsstaaten:
**DE ES FR GB IT**

(71) Anmelder: **DORNIER GMBH**
**Postfach 1420**
**D-7990 Friedrichshafen 1(DE)**

(72) Erfinder: **Bartels, Sven, Dipl.-Ing.**
**Hepbacherstrasse 22**
**D-7778 Markdorf(DE)**
Erfinder: **Gansohr, Johann**
**Markgrafstrasse 36**
**D-7775 Bermatingen(DE)**

(74) Vertreter: **Landsmann, Ralf, Dipl.-Ing.**
**c/o DORNIER GMBH Postfach 1420**
**D-7990 Friedrichshafen 1(DE)**

(54) **Kraftmesssensor.**

(57) Die Neuerung betrifft einen Sensor zur Messung eingeleiteter Kräfte, der aus einem einzigen Werkstoffblock herausgearbeitet ist. Auf zwei ineinander schwingenden Bereichen sind Dehnungsmeßstreifen montiert, die bei Einleitung einer Kraft in den äußeren der beiden Bereiche durch Ausschwingen dieser Bereiche in senkrecht zueinanderstehenden Kraftrichtungen Meßsignale abgeben, die unmittelbar ein Maß für die eingeleitete Kraft darstellen. Ein in den Sensor und einen der schwingenden Bereiche hineinreichender Halteschaft fixiert den Sensor.

EP 0 410 097 A2

## KRAFTMESSSENSOR

Die Neuerung betrifft einen Gegenstand nach dem Oberbegriff des Anspruchs 1.

Bekannte, mehrachsige Sensoren sind teuer und bedürfen überwiegend einer komplizierten Rechnerauswertung der einzelnen Meßstellen, um die Kraftkomponenten in Koordinaten anzugeben.

Regelkreise mit Kraftmeßgliedern lassen bei unbekannten Stop- oder Kollisionspunkten nur bescheidene Bewegungsgeschwindigkeiten des Stellgliedes zu, da sonst das Kraftmeßglied im Kollisionsfall dem Regelkreis nicht mehr zu verarbeitende Gradienten im Kraftanstieg meldet.

Bei der vorliegenden Neuerung wird ein Kraftmeßsensor aus einem Monoblock eines Werkstoffes, beispielsweise eines Federstahls, herausgearbeitet, wobei vorzugsweise die Bearbeitung durch Funkenerosion erfolgt. Durch eine spezielle Geometrie wird eine definierte Nachgiebigkeit des Sensors in allen Richtungen erzielt, so daß die Gradienten im Kraftanstieg verarbeitbar bleiben. Durch die verwendete Monoblockbauweise wird ein gutes Linearitäts- und Hystereseverhalten erreicht. Durch die spezielle Bauweise des Sensors fallen die Kraftkomponenten achsrein an und es besteht keine Not wendigkeit einer rechnerunterstützten Meßdatenverarbeitung.

Auf den Seitenteilen des Monoblocks sind Dehnungsmeßstreifen vorgesehen, deren Ausgangssignale verstärkt werden und direkt ein Maß für die eingeleitete Kraft angeben. Infolge der gewählten Geometrie ist eine definierte Nachgiebigkeit des Materials gewährleistet. Die Gestaltung der Verbindungsbereiche als dünne, lange Streifen ergibt eine elastische Nachgiebigkeit des ineinanderliegenden, rechtwinklig zueinanderstehenden Blattfederparallelogramms. Aufgrund der hohen Dehnung, durch Monoblockbauweise und verwendeten Werkstoff wird höchste Signalausbeute aus den Dehnungsmeßstreifen erzielt.

Zur Anwendung kommen Kraftmeßsensoren der beschriebenen Art beispielsweise in der Schalthand eines Fahrpiloten, womit die auf diesen ausgeübte Kraft gemessen werden soll.

Die Neuerung wird anhand von Figuren näher erläutert.

Es zeigen:

Figur 1 eine Prinzipskizze des Sensors

Figur 2 eine Ausführungsform des Kraftmeßsensors aus verschiedenen Positionen

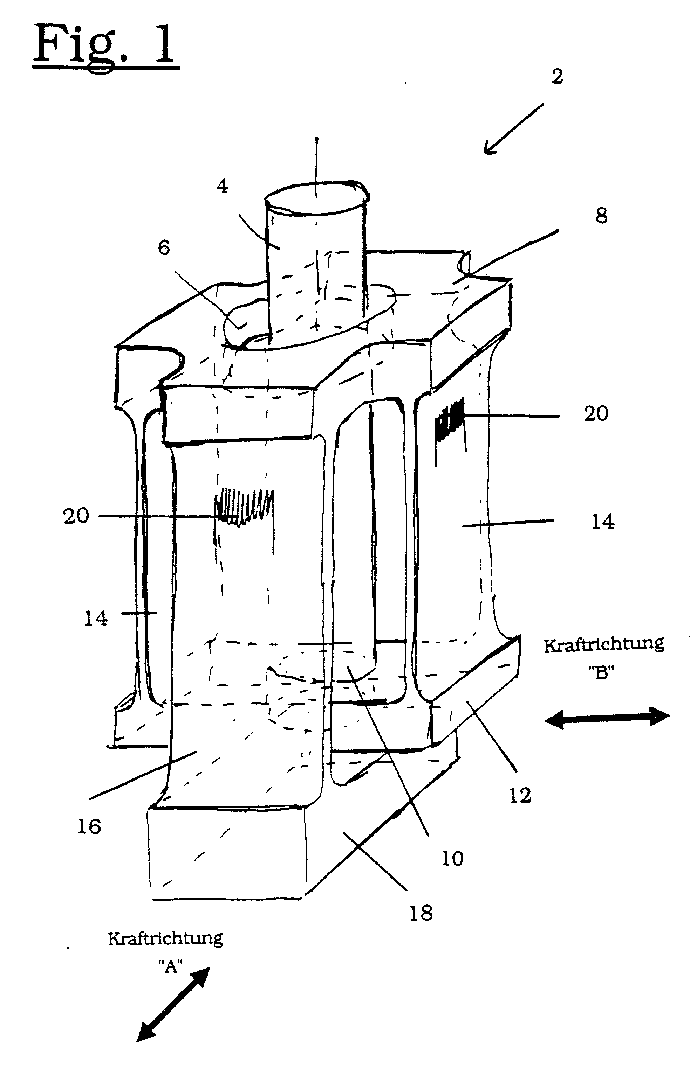

Die Figur 1 zeigt eine Prinzipskizze des Kraftmeßsensors 2, der mit einem Halteschaft 4 an einem feststehenden Punkt außerhalb des Sensors justiert ist. Der Halteschaft 4 ragt durch eine Öffnung 6 in einem ersten Bereich 8 hindurch und ist an seinem Ende 10 in einem zweiten Bereich 12 des Sensors 2 montiert. Dieser zweite Bereich 12 ist schwingend über zwei Verbindungsbereiche 14 mit dem ersten Bereich 8 verbunden.

In gleicher Weise ausgebildet sind zwei weitere Verbindungsbereiche 16, die rechtwinklig zu den Verbindungsbereichen 14 angeordnet sind und ebenfalls Verbindung zum ersten Bereich 8 haben. An den dem ersten Bereich 8 gegenüberliegenden Enden der Verbindungsbereiche 16 befindet sich ein dritter Bereich 18. Die Verbindungsbereiche 16 sind länger und ragen über den zweiten Bereich 12 hinaus, so daß der dritte Bereich 18 außerhalb des zweiten Bereichs 12 angeordnet ist. Die Verbindungsbereiche sind als lange dünne Streifen ausgebildet, was eine gute elastische Nachgiebigkeit begründet. Auf diese Weise kann der zweite Bereich 12 an den Verbindungsbereichen 14 innerhalb des ebenfalls schwingenden dritten Bereichs 18 und dessen Verbindungsbereichen 16 frei schwingen. Über den dritten Bereich 18 wird die zu messende Kraft in den Sensor eingeleitet. Dabei bestehen zwei Hauptkraftrichtungen: eine erste Kraftrichtung "A", in der der dritte Bereich 18 schwingt und eine senkrecht dazu stehende Kraftrichtung "B", in der der zweite Bereich 12 schwingt. Auf den Verbindungsbereichen sind Dehnungsmeßstreifen 20 angeordnet, die über hier nicht gezeigte Verbindungsleitungen mit Signalverstärkern verbunden sind. Eine in den Sensor eingeleitete Kraft läßt sich aus den von den Dehnungsmeßstreifen 20 abgegebenen Signalen nach Verstärkung unmittelbar entnehmen, ohne daß größere rechnergestützte Auswertungen notwendig sind.

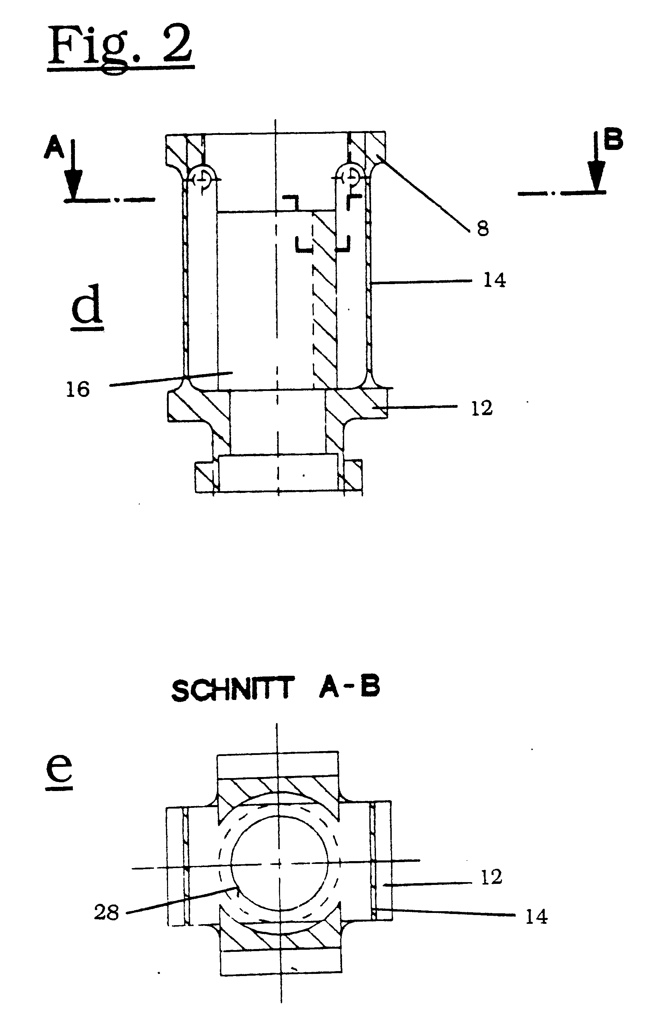

Die Figuren 2 a bis e zeigen den Kraftmeßsensor in verschiedenen Ansichten und Schnitten. Gleiche Bereiche sind mit gleichen Ziffern wie in Figur 1 gekennzeichnet.

Figuren 2 a und 2 c zeigen den Sensor 2 jeweils aus gegenüberliegenden Positionen. Im Bereich 18 des Sensors 2 sind vier Bohrungen 24 vorgesehen, an denen eine Einrichtung zur Krafteinleitung in den Bereich 18 vorgesehen werden kann.

Durch die Bohrung 26 in diesem Bereich 18 ist der Bereich 12 zu sehen, in den ein hier nicht gezeigter Halteschaft 4 durch die Öffnung 6 hindurch bis zur Bohrung 28 ragt und dort befestigt ist. Der Halteschaft 4 ist außerhalb des Sensors 2 fest justiert.

Erster, zweiter und dritter Bereich 8, 12 und 18 sowie die Verbindungsbereiche 14 und 16 sind aus einem einzigen Werkstoffblock herausgearbeitet, beispielsweise herauserodiert, wozu Hilfsbohrungen, wie sie in den Figuren 2 b und 2 d zu sehen sind, erforderlich sind. Als Werkstoff kommt beispielsweise Federstahl mit einer hohen Homogenität in Frage. Andere Werkstoffe, wie RHF 33, ein Werkstoff, der aushärtbar ist und nur geringsten Verzug aufweist, oder antimagnetische Werkstoffe, sind ebenfalls denkbar.

**Ansprüche**

1. Sensor zur Messung eingeleiteter Kräfte, **gekennzeichnet durch**
- den Aufbau aus einem einzigen Werkstoffblock in Form eines Blattfederparallelogramms,
- einen ersten Bereich (8) und zwei weitere Bereiche (12, 18), die ineinander schwingend, rechtwinklig zueinander an langen, dünnen, streifenförmigen Verbindungsbereichen (14, 16) angeordnet sind, wobei zwei gegenüberliegende Verbindungsbereiche gleiche Länge und zwei nebeneinanderliegende Verbindungsbereiche verschiedene Länge aufweisen,
- an den Verbindungsbereichen (14, 16) vorgesehene, Verformungen feststellende Mittel (20),
- einen durch eine Öffnung (6) in dem ersten Bereich (B) hindurchragenden und am Bereich (12) befestigten Halteschaft (4) und
- Einleitung der Kraft in den Sensor (2) über den Bereich (18).

2. Sensor nach Anspruch 1, dadurch gekennzeichnet, daß er aus Federstahl besteht.

3. Sensor nach Anspruch 1, dadurch gekennzeichnet, daß er aus RHF 33 besteht.

4. Sensor nach Anspruch 1, dadurch gekennzeichnet, daß die Verformungen feststellenden Mittel Dehnungsmeßstreifen sind.

# Fig. 1

2

4

6

8

20

20

14

14

16

12

10

18

Kraftrichtung
"B"

Kraftrichtung
"A"

# <u>Fig. 2</u>

**A**

<u>d</u>

16 — 8

14

12

## SCHNITT A-B

<u>e</u>

28 — 12

14